# FASCICULE DE BREVET EUROPEEN

(11) **EP 2 978 668 B1**
(45) Date de publication et mention de la délivrance du brevet: **01.02.2017**
(21) Numéro de dépôt: 14718661.3
(22) Date de dépôt: 21.03.2014
(51) Int. Cl.: B64D 27/26

(54) **DISPOSITIF D'ARTICULATION À ROTULE POUR LA SUSPENSION D'UNE TURBOMACHINE A UN PYLONE OU LA SUSPENSION D'UN EQUIPEMENT AU CORPS DE LA TURBOMACHINE**
VORRICHTUNG MIT EINEM KUGELGELENK ZUM AUFHÄNGEN EINER TURBOMASCHINE AN EINEM PYLON ODER ZUM AUFHÄNGEN EINER VORRICHTUNG AM RUMPF DER TURBOMASCHINE
BALL-JOINTED DEVICE FOR SUSPENDING A TURBOMACHINE FROM A PYLON OR FOR SUSPENDING EQUIPMENT FROM THE BODY OF THE TURBOMACHINE

(30) Priorité: 29.03.2013 FR 1352911
(43) Date de publication de la demande: 03.02.2016
(73) Titulaire: Safran Aircraft Engines, 75015 Paris (FR)
(72) Inventeur: BESNARD, Maryline, F-77550 Moissy-Cramayel cedex (FR); LAPORTE, Arnaud, F-77550 Moissy-Cramayel cedex (FR)
(74) Mandataire: Gevers & Orès
(86) Numéro de dépôt international: PCT/FR2014/050669
(87) Numéro de publication internationale: WO 2014/154980

(56) Documents cités:
- EP-A1- 0 744 338
- FR-A1- 2 923 460
- GB-A- 2 490 781
- US-B1- 6 296 203

## Description

### DOMAINE TECHNIQUE

La présente invention concerne un dispositif d'articulation à rotule pour la suspension d'une turbomachine à un pylône ou la suspension d'un équipement au corps d'une turbomachine.

### ETAT DE L'ART

L'état de l'art comprend notamment le document FR-A1-2 923 460.

Une turbomachine est en général suspendue à un pylône par l'intermédiaire d'un « yoke » qui est fixé sur le corps de la turbomachine, au niveau de son carter intermédiaire. Ce yoke comprend des chapes sur lesquelles sont articulées des extrémités de bielles dont les autres extrémités sont reliées à des moyens de suspension de la turbomachine au pylône. Chaque bielle est en général articulée sur une chape par un dispositif d'articulation à rotule.

Dans la technique actuelle, chaque bielle a une extrémité qui porte une rotule et qui est intercalée entre les deux oreilles d'une chape, la rotule comportant un alésage de passage d'un axe dont les extrémités traversent des orifices des oreilles, cet axe comportant un alésage axial de montage d'une vis de fixation de l'ensemble.

Les dispositifs de ce type actuellement utilisés ne sont toutefois pas entièrement satisfaisants, en particulier lorsque le yoke est réalisé en titane. En effet, lorsque le yoke est réalisé en titane, ses chapes sont très sensibles à l'usure pouvant être provoquée par le contact et le frottement des pièces du dispositif ainsi que par le remplacement de certaines de ces pièces lors d'une opération de maintenance. De plus, il est préférable que la rotule soit immobilisée axialement pour augmenter sa durée de vie, ce qui n'est pas toujours le cas dans les dispositifs connus.

Dans la demande EP-A1-1 568 903, la rotule et l'écrou de serrage de la vis du dispositif d'articulation sont en appui sur une oreille de la chape, ce qui n'est pas admissible lors de l'utilisation d'une chape en titane car une rotation de la rotule ou de l'écrou pourrait provoquer une usure par frottement de la chape.

Dans la demande EP-A1-2 058 229, la rotule n'est pas bloquée axialement car la vis prend appui sur un épaulement de la vis. Par ailleurs, la vis comprend un rebord annulaire en appui sur l'une des oreilles de la chape, ce qui risque de l'user en fonctionnement. Bien qu'il soit proposé d'intercaler une plaque entre le rebord et la chape, cette plaque immobilise en rotation l'axe, ce qui est désavantageux. En effet, le blocage en rotation de l'axe risque d'entraîner une concentration de contraintes, ce qui peut se traduire par une rupture de l'axe.

La présente invention a notamment pour but d'apporter une solution simple, efficace et économique aux problèmes précités.

### EXPOSE DE L'INVENTION

L'invention propose un dispositif d'articulation à rotule pour la suspension d'une turbomachine à un pylône ou la suspension d'un équipement au corps d'une turbomachine, comprenant un premier organe dont une extrémité porte une rotule et est intercalée entre les deux oreilles d'un second organe, la rotule comportant un alésage de passage d'un axe dont les extrémités traversent des douilles montées serrées dans des orifices des oreilles, le dispositif comprenant en outre une vis ou un écrou coopérant avec l'axe pour assurer un serrage et un blocage axial de la rotule, la rotule étant montée serrée entre une première des douilles précitées et une première extrémité d'une bague cylindrique qui est montée autour d'une partie de l'axe et dans la seconde des douilles précitées, cette bague étant sollicitée vers la rotule par serrage de la vis ou de l'écrou, caractérisé en ce que la bague comporte à sa première extrémité des moyens amovibles de retenue axiale de la bague vis-à-vis du second organe lors d'une opération de démontage du dispositif.

Selon l'invention, une bague est engagée sur l'axe et à l'intérieur de la seconde douille, cette bague étant montée par coulissement et étant serrée contre la rotule au moyen de la vis, de façon à immobiliser axialement la rotule et augmenter ainsi sa durée de vie.

Lorsque le dispositif est démonté, la vis, l'axe et le premier organe et sa rotule sont retirés. La bague glissante peut également être facilement retirée. Lors du remontage du dispositif, il est possible qu'un opérateur oublie de remonter la bague glissante, ce qui provoquerait en utilisation une forte flexion dans l'axe et dans les oreilles, pouvant mener à une rupture du dispositif. Pour éviter ce problème, la présente invention prévoit des moyens de retenue axiale de la bague vis-à-vis du second organe, ce qui permet de rendre la bague imperdable vis-à-vis du second organe.

Toutefois, dans le cas probable où la bague serait usée et devrait être remplacée lors d'une opération de maintenance, il serait nécessaire de retirer la douille dans laquelle est engagée la bague pour pouvoir retirer cette dernière. Comme la douille est montée serrée dans l'orifice de l'oreille, il faudrait la détruire pour la retirer ce qui entraînerait nécessairement une reprise des côtes de l'orifice de l'oreille et entraînerait donc un surcoût important. Pour remédier à ce problème, les moyens de retenue axiale de la bague sont amovibles, c'est-à-dire que, dans le cas où la bague doit être remplacée, les moyens de retenue sont retirés et la bague est ensuite extraite par coulissement axial. Ces moyens de retenue amovibles autorisent en outre le montage de la bague dans l'orifice de l'oreille avant ou après le montage de la douille dans cette oreille.

Avantageusement, les moyens amovibles de retenue axiale comprennent un circlip monté de manière amovible sur la première extrémité de la bague et apte à venir en appui sur la deuxième des douilles précitées dans le cas où la vis est dévissée. Ce circlip comprend par exemple un anneau fendu qui est logé dans une gorge annulaire externe de la première extrémité de la bague.

L'axe peut comprendre un alésage axial de montage de la vis dont la tête est destinée à prendre appui sur une extrémité de l'axe. En variante, l'axe est solidaire à une extrémité d'une tige filetée de vissage de l'écrou destiné à venir en appui sur une extrémité de la bague. Dans une autre variante, l'axe comprend à une extrémité un orifice taraudé dans lequel est vissée une vis dont la tête est destinée à prendre appui sur une extrémité de la bague.

La bague comprend de préférence à sa seconde extrémité un rebord annulaire interne sur la périphérie interne duquel la tête de la vis ou un écrou est destiné à venir en appui.

Le dispositif comprend de préférence une troisième douille montée serrée dans l'orifice de l'oreille dans lequel est montée la première douille, ces première et troisième douilles étant coaxiales et montées côte à côte dans l'orifice de l'oreille. Chacune de ces douilles comporte un rebord annulaire externe d'appui sur une face latérale de l'oreille du second organe. Le rebord de la première douille est en appui sur l'une des faces latérales de l'oreille et le rebord de la troisième douille est en appui sur la face latérale opposée de cette oreille.

Cette troisième douille peut être intercalée entre la face latérale précitée de l'oreille et un rebord annulaire externe de l'axe, ce rebord étant sollicité axialement vers la troisième douille par serrage de la vis ou de l'écrou permettant ainsi de protéger le second organe lorsqu'il est réalisé en titane.

Les première et troisième douilles peuvent être séparées l'une de l'autre par un jeu axial.

Le premier organe peut être une bielle et le second organe peut être une chape, ou inversement.

La présente invention concerne également une turbomachine, telle qu'un turboréacteur ou un turbopropulseur d'avion, caractérisée ce qu'elle est équipée d'au moins un dispositif tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux figures qui sont des vues schématiques en coupe axiale de dispositifs d'articulation à rotule selon l'invention.

### DESCRIPTION DETAILLEE

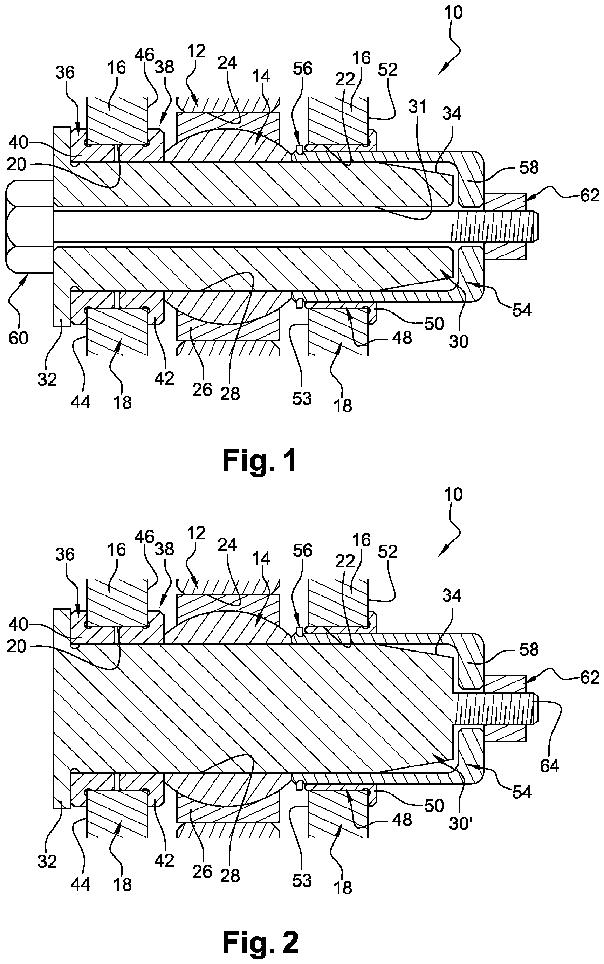

La figure 1 représente de manière schématique un dispositif 10 d'articulation à rotule pour la suspension d'une turbomachine à un pylône ou la suspension d'un équipement au corps d'une turbomachine, ce dispositif comportant une bielle 12 dont une extrémité porte une rotule 14 et est intercalée entre les deux oreilles 16 d'une chape 18.

Dans le cas de la suspension d'une turbomachine à un pylône, la chape 18 fait partie d'un yoke qui est de préférence en titane. La chape 18 est du type femelle et ses deux oreilles 16 sont plates et parallèles entre elles, ces oreilles 16 comportant des orifices 20, 22 coaxiaux et à parois internes cylindriques.

La bielle 12 est reliée à des moyens de suspension au pylône et son extrémité visible dans le dessin est plate et comprend un orifice 24 à paroi cylindrique interne de montage d'une cage 26 qui est sertie dans l'orifice et dont la paroi sphérique interne accueille la rotule 14 qui est libre de tourner dans la cage 26. La rotule 14 comprend un alésage cylindrique 28 traversé par un axe 30 à corps cylindrique dont les extrémités passent dans les orifices 20, 22 des oreilles 16.

L'axe 30 est creux et comprend un alésage axial 31. L'axe 30 comprend à une de ses extrémités un rebord annulaire externe 32, sa partie d'extrémité 34 opposée ayant une forme sensiblement tronconique dans l'exemple représenté. Cette forme particulière favorise le montage sous le pylône des moyens de suspension de la turbomachine. Ce montage s'effectue notamment par rotation des boomerangs assemblés à la turbomachine et par assemblage de la partie correspondante côté pylône. En effet, la turbomachine est montée jusqu'à l'aile et les moyens de suspension sont ensuite fixés en venant passer l'axe des boomerangs sur la partie pylône. La partie tronconique de l'axe permet d'avoir une mise en position de l'ensemble.

Dans l'exemple représenté, deux douilles 36, 38 sont montées serrées dans l'orifice 20 de l'une 16 des oreilles (la douille de gauche sur le dessin). Ces douilles 36, 38 sont coaxiales et sensiblement identiques. Elles comprennent chacune un corps cylindrique relié à une extrémité à un rebord annulaire externe 40, 42.

La douille 36 est engagée dans l'orifice 20 depuis un côté (côté gauche) de l'oreille 16 de sorte que son rebord 40 prenne appui axialement sur la face latérale extérieure 44 de l'oreille (l'intérieur étant situé du côté de la rotule 14). Le rebord 36 de la douille est ici intercalé entre cette face latérale 44 et le rebord 32 de l'axe.

La douille 38 est engagée dans l'orifice 20 depuis le côté opposé (côté droit) de l'oreille 16 de sorte que son rebord 42 prenne appui axialement sur la face latérale intérieure 46 de l'oreille. Le rebord 42 de la douille 38 est ici destiné à venir en appui sur la rotule 14 pour la bloquer axialement, comme cela sera décrit plus en détail dans ce qui suit.

Les douilles 36, 38 sont séparées l'une de l'autre par un jeu axial.

Une autre douille 48 est montée serrée dans l'orifice 22 de l'autre oreille 16 de la chape, cette douille 48 étant coaxiale aux douilles 36, 38 et comprenant également un corps cylindrique relié à une extrémité à un rebord annulaire externe 50. La douille 48 est engagée dans l'orifice 22 depuis un côté de l'oreille 16 (côté droit), de sorte que son rebord 50 prenne appui axialement sur la face latérale extérieure 52 de l'oreille. Le corps de la douille a une longueur ou dimension axiale supérieure à celle de l'orifice 22 de sorte que son extrémité libre dépasse de la face intérieure 53 de l'oreille 16.

Une bague cylindrique 54 est engagée dans la douille 48 et sur la partie d'extrémité tronconique 34 de l'arbre, cette bague ayant une longueur ou dimension axiale supérieure à celle de l'orifice 22 et de la douille 48 de sorte que, en position de montage représentée dans le dessin, les extrémités de la bague soient situées à distance de l'oreille 16 et de la douille 48.

La bague 54 comporte à son extrémité située du côté de la rotule 14 une gorge annulaire externe de réception d'un anneau fendu formant un circlip 56. La bague 54 comprend à son extrémité opposée un rebord annulaire interne 58 qui s'étend en regard de l'extrémité de l'axe 30, opposée à son rebord 32. La périphérie interne de ce rebord 58 définit un orifice qui est aligné avec l'alésage 31 de l'axe 30 pour le montage d'une vis 60.

Dans l'exemple représenté, la vis 60 est engagée dans l'alésage 31 de l'axe 30 par son extrémité comportant le rebord externe 32, de sorte que sa tête prenne appui sur cette extrémité. Dans cette position, l'extrémité libre de la vis dépasser axialement de l'orifice précité de la bague 54 et reçoit un écrou 62 qui est destiné à prendre appui sur le rebord 58 de la bague.

Le dispositif 10 selon l'invention peut être monté de la façon suivante : la douille 48 est montée serrée dans l'orifice 22 de l'oreille, par exemple par frettage ou à l'azote ; les douilles 36, 38 sont ensuite montées serrées dans l'orifice 20 de l'oreille, par exemple par frettage ou à l'azote ; la bague 54 est engagée dans la douille 48 puis le circlip 56 est monté dans la gorge de la bague 54 ; l'extrémité de la bielle 12 est engagée entre les oreilles 16 de la chape 18 puis l'axe 30 est engagé dans les douilles 36, 38, la rotule 14 et la bague 54. La vis 60 est engagée dans l'alésage 31 de l'axe 30 et l'écrou 62 est vissé à l'extrémité libre de la vis. Le serrage de la vis et de l'écrou provoque le serrage et le blocage axial de la rotule 14 entre la douille 38 et la bague 54.

Lors d'un démontage du dispositif 10, l'écrou 62 est desserré et la vis 60 et l'écrou 62 sont retirés. L'axe 30 est retiré ce qui libère la rotule 14 et la bielle 12, qui peuvent également être retirées. La bague 54 ne risque pas de sortir involontairement de la douille 48 car, bien qu'elle soit montée coulissante dans celle-ci, elle est retenue axialement d'un côté par appui du circlip 56 sur l'extrémité libre de la douille 48 et du côté opposé par appui de son extrémité libre sur la douille 38 (du fait que la longueur de la bague 54 est supérieure à la distance inter-oreilles). Toutefois, dans le cas où la bague 54 doit être retirée et remplacée en cas d'usure, le circlip 56 peut être retiré manuellement ou au moyen d'un outil pour pouvoir retirer la bague par translation axiale du côté opposé aux douilles 36, 38.

Ce dispositif 10 est particulièrement avantageux car, en utilisation, les risques d'usure des oreilles 16 de la chape 18, en particulier lorsqu'elle est en titane, sont très limitées. En effet, bien que l'axe 30 ne soit pas bloqué en rotation, une rotation de celui-ci ne risque pas d'user la chape car les douilles 36, 38 évitent un contact direct de l'axe sur la chape. De plus, la douille 48 protège la chape de la bague 54 qui peut tourner en utilisation. La rotule 14 ne peut pas non plus venir en appui sur la chape.

La variante de réalisation de la figure 2 diffère du mode de réalisation décrit ci-dessus essentiellement en ce que l'axe 30' ne comprend pas d'alésage axial 31. L'axe 30' est solidaire d'une tige filetée 64 qui est reliée à l'extrémité de l'axe située du côté de la bague 54, cette tige filetée 64 traversant l'orifice délimité par le rebord 58 de la bague 54 et recevant un écrou 62 destiné à prendre appui sur ce rebord 58.

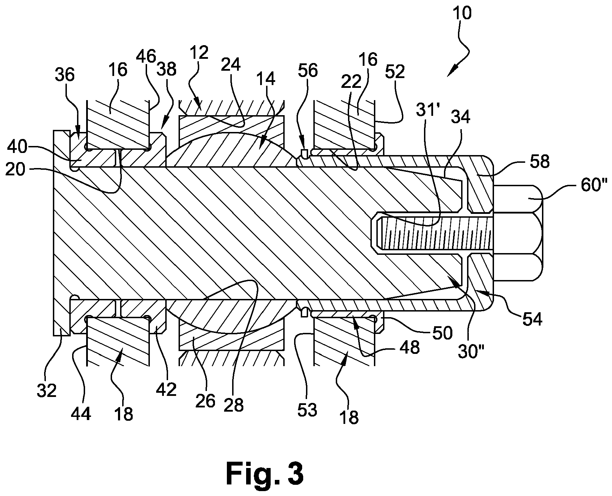

La variante de réalisation de la figure 3 diffère du mode de réalisation de la figure 1 essentiellement en ce que l'axe 30" ne comprend pas non plus d'alésage axial 31. Cet axe 30" comprend un orifice taraudé 31' qui débouche à l'extrémité de l'axe, située du côté de la bague 54, et dans lequel est destinée à être vissée une vis 60' qui a naturellement une longueur inférieure à celle de la vis 60 précitée, de sorte que sa tête puisse prendre appui sur le rebord 58 de la bague 54.

## Revendications

1. Dispositif (10) d'articulation à rotule pour la suspension d'une turbomachine à un pylône ou la suspension d'un équipement au corps d'une turbomachine, comprenant un premier organe (12) dont une extrémité porte une rotule (14) et est intercalée entre les deux oreilles (16) d'un second organe (18), la rotule comportant un alésage (28) de passage d'un axe (30) dont les extrémités traversent des douilles (36, 38, 48) montées serrées dans des orifices (20, 22) des oreilles, le dispositif comprenant en outre une vis (60, 60') ou un écrou (62) coopérant avec l'axe pour assurer un serrage et un blocage axial de la rotule, la rotule étant montée serrée entre une première (38) des douilles précitées et une première extrémité d'une bague cylindrique (54) qui est montée autour d'une partie de l'axe et dans une deuxième (48) des douilles précitées, cette bague étant sollicitée vers la rotule par serrage de la vis ou de l'écrou, **caractérisé en ce que** la bague comporte à sa première extrémité des moyens (56) amovibles de retenue axiale de la bague vis-à-vis du second organe lors d'une opération de démontage du dispositif.

2. Dispositif selon la revendication 1, **caractérisé en ce que** les moyens amovibles de retenue axiale comprennent un circlip (56) monté de manière amovible sur la première extrémité de la bague (54) et apte à venir en appui sur la deuxième (48) des douilles précitées dans le cas où la vis ou l'écrou est dévissé.

3. Dispositif selon la revendication 2, **caractérisé en ce que** le circlip (56) comprend un anneau fendu qui est logé dans une gorge annulaire externe de la première extrémité de la bague (54).

4. Dispositif selon l'une des revendications précédentes, **caractérisé en ce que** l'axe (30) comprend un alésage axial (31) de montage de la vis (60) dont la tête est destinée à prendre appui sur une extrémité de l'axe, ou l'axe (30') est solidaire à une extrémité d'une tige filetée (64) de vissage de l'écrou (62) destiné à venir en appui sur une extrémité de la bague (54), ou l'axe (30") comprend à une extrémité un orifice taraudé (31') dans lequel est vissée une vis (60") dont la tête est destinée à prendre appui sur une extrémité de la bague.

5. Dispositif selon l'une des revendications précédentes, **caractérisé en ce que** la bague (54) comprend à sa seconde extrémité un rebord annulaire interne (58) sur la périphérie interne duquel la tête de la vis ou un écrou (62) est destiné à venir en appui.

6. Dispositif selon l'une des revendications précédentes, **caractérisé en ce qu'**il comprend une troisième douille (36) montée serrée dans l'orifice (20) de l'oreille (16) dans lequel est montée la première douille (38), ces première et troisième douilles étant coaxiales et montées côte à côte dans l'orifice de l'oreille, chacune de ces douilles comportant un rebord annulaire externe (40, 42) d'appui sur une face latérale (44, 46) de l'oreille du second organe.

7. Dispositif selon la revendication 6, **caractérisé en ce que** la troisième douille (36) est intercalée entre la face latérale (44) précitée de l'oreille (16) et un rebord annulaire externe (32) de l'axe (30), ce rebord étant sollicité axialement vers la troisième douille par serrage de la vis (60) ou de l'écrou (62).

8. Dispositif selon la revendication 6 ou 7, **caractérisé en ce que** les première et troisième douilles (36, 38) sont séparées l'une de l'autre par un jeu axial.

9. Dispositif selon l'une des revendications précédentes, **caractérisé en ce que** le premier organe est une bielle (12) et le second organe est une chape (18), ou inversement.

10. Turbomachine, telle qu'un turboréacteur ou un turbopropulseur d'avion, caractérisée ce qu'elle est équipée d'au moins un dispositif selon l'une des revendications précédentes.

## Patentansprüche

1. Gelenklager-Vorrichtung (10) für die Aufhängung einer Strömungsmaschine mit einem Pylon oder die Aufhängung einer Ausrüstung am Rumpf einer Strömungsmaschine, umfassend ein erstes Element (12), dessen eines Ende ein Kugelgelenk (14) trägt und zwischen den zwei Flügeln (16) eines zweiten Elements (18) eingeschoben ist, wobei das Kugelgelenk eine Bohrung (28) zum Durchführen einer Achse (30) umfasst, deren Enden Hülsen (36, 38, 48) durchqueren, die in den Öffnungen (20, 22) der Flügel geklemmt montiert sind, wobei die Vorrichtung ferner eine Schraube (60, 60') oder eine Mutter (62) umfasst, die mit der Achse zum Sicherstellen eines Klemmens und eines axialen Blockierens des Kugelgelenks zusammenwirkt, wobei das Kugelgelenk zwischen einer ersten (38) der Hülsen und einem ersten Ende eines zylindrischen Rings (54), der um einen Teil der Achse und in einer zweiten (48) der Hülsen montiert ist, geklemmt montiert ist, wobei der Ring zum Kugelgelenk durch Anziehen der Schraube oder der Mutter beansprucht wird, **dadurch gekennzeichnet, dass** der Ring an einem ersten Ende abnehmbare Mittel (56) zum axialen Halten des Rings zum zweiten Element bei einem Vorgang zur Demontage der Vorrichtung umfasst.

2. Vorrichtung nach Anspruch 1, **dadurch gekennzeichnet, dass** die abnehmbaren Mittel zum axialen Halten einen auf abnehmbare Weise auf dem ersten Ende des Rings (54) montierten Sprengring (56) umfasst, der auf der zweiten (48) der Hülsen zur Anlage kommen kann, wenn die Schraube oder die Mutter aufgeschraubt wird.

3. Vorrichtung nach Anspruch 2, **dadurch gekennzeichnet, dass** der Sprengring (56) einen Schlitzring umfasst, der in einer ringförmigen Außennut des ersten Endes des Rings (54) angeordnet ist.

4. Vorrichtung nach einem der vorhergehenden Ansprüche, **dadurch gekennzeichnet, dass** die Achse (30) eine Axialbohrung (31) zur Montage der Schraube (60) umfasst, deren Kopf vorgesehen ist, auf einem Ende der Achse zur Anlage zu kommen, oder die Achse (30') mit einem Ende einer Gewindestange (64) zum Verschrauben der Mutter (62) verbunden ist, die vorgesehen ist, auf einem Ende des Rings (54) zur Anlage zu kommen, oder die Achse (30") an einem Ende eine Gewindeöffnung (31') umfasst, in der eine Schraube (60") verschraubt ist, deren Ende vorgesehen ist, auf einem Ende des Rings zur Anlage zu kommen.

5. Vorrichtung nach einem der vorhergehenden Ansprüche, **dadurch gekennzeichnet, dass** der Ring (54) an seinem zweiten Ende einen ringförmigen Innenrand (58) am inneren Umfang umfasst, auf den der Kopf der Schraube oder eine Mutter (62) zur Anlage kommen soll.

6. Vorrichtung nach einem der vorhergehenden Ansprüche, **dadurch gekennzeichnet, dass** sie eine in der Öffnung (20) des Flügels (16), in dem die erste Hülse (38) montiert ist, montierte dritte Hülse (36) umfasst, wobei erste und dritte Hülse koaxial und nebeneinander in der Öffnung des Flügels montiert sind, wobei jede dieser Hülsen einen ringförmigen Außenrand (40, 42) zur Auflage auf einer Seitenfläche (44, 46) des Flügels des zweiten Elements umfasst.

7. Vorrichtung nach Anspruch 6, **dadurch gekennzeichnet, dass** die dritte Hülse (36) zwischen der Seitenfläche (44) des Flügels (16) und einem ringförmigen Außenrand (32) der Achse (30) eingeschoben ist, wobei der Rand axial zur dritten Hülse durch Anziehen der Schraube (60) oder der Mutter (62) beansprucht wird.

8. Vorrichtung nach Anspruch 6 oder 7, **dadurch gekennzeichnet, dass** erste und dritte Hülse (36, 38) durch ein axiales Spiel voneinander getrennt sind.

9. Vorrichtung nach einem der vorhergehenden Ansprüche, **dadurch gekennzeichnet, dass** das erste Element ein Pleuel (12) und das zweite Element ein Gabelkopf (18) ist oder umgekehrt.

10. Strömungsmaschine wie ein Flugzeug-Turbostrahltriebwerk oder -Turbopropellertriebwerk, **dadurch gekennzeichnet, dass** sie wenigstens mit einer Vorrichtung nach einem der vorhergehenden Ansprüche ausgestattet ist.

## Claims

1. Ball-joint articulation device (10) for suspending a turbine engine from a strut or suspending an item of equipment on the body of a turbine engine, comprising a first member (12), one end of which carries a ball joint (14) and is interposed between the two lugs (16) of a second member (18), the ball joint comprising a bore (28) for a shaft (30) to pass, the ends of which pass through sockets (36, 38, 48) mounted clamped in orifices (20, 22) in the lugs, the device further comprising a screw (60, 60') or a nut (62) cooperating with the shaft so as to provide clamping and axial locking of the ball joint, the ball joint being mounted clamped between a first (38) of the aforementioned sockets and a first end of a cylindrical ring (54) that is mounted around part of the shaft and in a second (48) of the aforementioned sockets, this ring being urged towards the ball joint by tightening of the screw or nut, **characterised in that** the ring comprises, at its first end, removable means (56) for axial holding of the ring with respect to the second member during an operation of the device.

2. Device according to claim 1, **characterised in that** the removable axial-holding means comprise a circlip (56) mounted removably on the first end of the ring (54) and able to come into abutment on the second (48) of the aforementioned sockets in the event of the screw or nut being unscrewed.

3. Device according to claim 2, **characterised in that** the circlip (56) comprises a split annulus that is housed in an external annular groove of the first end of the ring (54).

4. Device according to one of the preceding claims, **characterised in that** the shaft (30) comprises an axial bore (31) for mounting the screw (60), the head of which is intended to bear on one end of the shaft, or the shaft (30') is secured to one end of a threaded rod (64) for screwing the nut (62) intended to come into abutment on one end of the ring (54), or the shaft (30") comprises at one end an internally threaded orifice (31') in which a screw (60") is screwed, the head of which is intended to bear on one end of the ring.

5. Device according to one of the preceding claims, **characterised in that** the ring (54) comprises at its second end an internal annular rim (58) on the internal periphery of which the head of the screw or nut (62) is intended to bear.

6. Device according to one of the preceding claims, **characterised in that** it comprises a third socket (36) mounted clamped in the orifice (20) of the lug (16) in which the first socket (38) is mounted, these first and third sockets being coaxial and mounted side by side in the orifice of the lug, each of these sockets comprising an external annular rim (40, 42) for abutment on a lateral face (44, 46) of the lug of the second member.

7. Device according to claim 6, **characterised in that** the third socket (36) is interposed between the aforementioned lateral face (44) of the lug (16) and an external annular rim (32) of the shaft (30), this rim being urged axially towards the third socket by tightening of the screw (60) or nut (62).

8. Device according to claim 6 or 7, **characterised in that** the first and third sockets (36, 38) are separated from each other by an axial clearance.

9. Device according to one of the preceding claims, **characterised in that** the first member is a linkage (12) and the second member is a clevis (18), or vice versa.

10. Turbine engine, such as an aeroplane turbojet engine or turboprop engine, **characterised in that** it is equipped with at least one device according to one of the preceding claims.
